(19) **Europäisches Patentamt**
**European Patent Office**
**Office européen des brevets**

(11) **EP 3 027 902 B1**

(12) **EUROPEAN PATENT SPECIFICATION**

(45) Date of publication and mention
of the grant of the patent:
**28.02.2018 Bulletin 2018/09**

(21) Application number: **14742379.2**

(22) Date of filing: **07.07.2014**

(51) Int Cl.:
*F03D 15/00* (2016.01)     *F03D 7/02* (2006.01)

(86) International application number:
**PCT/NL2014/050452**

(87) International publication number:
**WO 2015/016703 (05.02.2015 Gazette 2015/05)**

(54) **WIND TURBINE**

WINDTURBINE

ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2013 NL 2011247**

(43) Date of publication of application:
**08.06.2016 Bulletin 2016/23**

(73) Proprietor: **Vervent B.V.**
**1786 RD Den Helder (NL)**

(72) Inventors:
• **VELTMAN, Christiaan**
**NL-1786 RD Den Helder (NL)**

• **DE VRIES, Edzo**
**NL-1786 RD Den Helder (NL)**
• **BAIS, Johannes Maria**
**NL-1786 RD Den Helder (NL)**

(74) Representative: **van Essen, Peter Augustinus et al**
**Van Essen Patent B.V.**
**Agro Business Park 50**
**6708 PW Wageningen (NL)**

(56) References cited:
**WO-A1-95/21326     WO-A1-96/18815
US-A- 2 153 523     US-A- 4 068 131**

## Description

### Field of the invention

The invention relates to a wind turbine. The invention further pertains to a method for controlling a wind turbine.

### Background of the invention

Many designs of windmills and wind turbines, also referred to as wind power plants, have been presented over the centuries. In the last decades, the designs of wind turbines seems to converge into a design that has a nacelle that is rotatably mounted on top of a tower to allow the head to be turned in the wind. In the nacelle, a generator is coupled to a rotor in order to generate electrical power. In these designs, many solutions to problems, and optimizations relating to such a design have been presented.

For instance, US4565929 describes a wind powered system for generating electricity. It has a generator that "may be operable as a motor for helping the wind energy bring the rotor up to speed". The system has a generator mounted in a nacelle structure on top of a tower. The generator is coupled to a fixed-pitch rotor. The motor operation was introduced to avoid complex variable pitch blades, and is used for starting up the system.

US7667343 describes a wind-driven hydrogen production system. It states that "a permanent-magnet generator is used as an electricity generator for the wind turbine to derive a power supply during start-up". It is evident that the generator does not have a driving mode, or is not used for compensating mechanical loads on the system.

EP2249030 discloses "a method of controlling a wind turbine having a rotor and a generator for producing power, the wind turbine being designed for a nominal load, the method comprising the steps of: determining a current load acting on at least a part of the wind turbine; calculating a load error, the load error representing the difference between the nominal load and the current load; controlling the wind turbine based on the load error; wherein the step of controlling the wind turbine comprises altering a parameter of the wind turbine so that the power or torque produced by the generator is altered". The load seems to be a load in the electrical sense.

Other designs are also proposed. WO9521326 according to its abstract describes a wind power generation system that comprises: a wind turbine with a horizontal rotor mounted on a bearing and able to rotate about the vertical axis, a primary energy unit, a mechanical transmission with a reduction gear; and a system for making the wind turbine rotate about the vertical axis. A mechanical transmission reduction gear, which has output which is designed as two coaxial shafts whose kinematic connection with the reduction gear input shaft ensures that the coaxial shafts rotate in opposite directions. It has a primary energy unit in the form of two counter-rotating cooperating work units, each of which is connected to one of the coaxial reduction gear shafts. The structural design of the system compensates for the reactive torque acting on the wind turbine in the horizontal plane, without any need for additional power-consuming mechanisms. The disclosure does not indicate a detailed design, thus leaving many questions relating to design and operation without answer.

### Summary of the invention

The prior art only provides a design concept.

Hence, it is an aspect of the invention to provide an alternative wind turbine which preferably, further at least partly, obviates one or more drawbacks in current wind turbines.

The invention thus provides a wind turbine according to claim 1.

In an embodiment, said set of conical rotor gears and said conical first and second drive gears are mutually adapted for coupling said turbine rotor shaft to said inner and outer vertical drive shaft with their drive shaft rotational axis and said rotor rotational axis at a tilt angle of between 1° and 10°.

The engaging conical gears in the rotor gear system allows positioning of the inner and outer vertical drive shaft perpendicular to the turbine rotor shaft, but also allows a tilt angle in addition to that perpendicular positioning. This allows a more flexible design of the wind turbine. In this respect, in fact the positioning relates to a rotational axis of the turbine rotor shaft with respect to a rotational axis of the inner and the outer vertical drive shaft.

In wind turbines, also referred to as wind power plants or even as 'windmills', in common designs the generator is positioned in the nacelle close to the rotor. This reduces the length of the drive train from rotor to electrical generator. It however brings the majority of the weight high above the ground and to be resting on a bearing carrying the nacelle.

In this text, the words 'axis' and 'axes' are used to define a line about which for instance a rotation takes in the mathematical sense. The word 'shaft' is used to define the physical object.

In the current text, a rotation of a nacelle about the longitudinal axis of the tower is indicated with yaw angle.

A deviation of the angle of the rotor rotational axis with the drive shafts rotational axis from perpendicular, i.e. 90°, will be indicated with the tilt angle $\alpha$. In use and without specific precautions, the drive shafts rotational axis will usually be vertical, and thus when a tilt angle is 0°, the rotor rotational axis will be horizontal. Thus, a tilt angle can be tilted up, referring to an angle larger than 90°, and tilted down, referring to an angle smaller than 90°. For a wind turbine, usually the tilt angle is tilted up. Thus, the rotational axis of the turbine rotor is at a tilt angle with respect to the horizontal, pointing up.

The rotor gears and the drive gears are referred to as 'conical'. It should be clear that these gears are in fact functionally conical, meaning that they operate with respect to one another as if they were mathematically conical. The shape of these gears may, however, deviate (slightly) from mathematically conical in order to optimize wear, resistance losses, and the like. The gears may (thus) in fact be substantially conical. For optimizing operation, the shape may, for instance, have a slight (additional) curvature, making one or more of the conical surfaces slightly convex or concave or combinations thereof. A skilled person will recognize the possibilities and design options.

The turbine rotor shaft is coupled to the turbine rotor. The turbine rotor may be mounted on the turbine rotor shaft. Alternatively, this also includes that the turbine rotor is mounted to a shaft which in turn is coupled to the turbine rotor shaft. In this coupling, provisions like a gearbox and/or a spline coupling may be provided. A spline coupling in this context relates to a coupling which allows two shafts to move with respect to one another in their longitudinal direction, but connects their rotation.

The wind turbine comprises a transmission which may in fact be a drive train coupling the rotation of the turbine rotor to the electrical generator. The turbine rotor shaft, rotor gear system and vertical drive shafts are part of this transmission. In this respect, the inner and outer vertical drive shafts are together also referred to as 'vertical drive shaft system'.

The gears of the turbine rotor gear system are referred to as 'conical gears'. In fact, these gears are part of a complete cone. In particular, a ring from a cone or conical ring. This may also be referred to as a cone section. In most instances, the cone is a right circular cone. In the art, such conical gears are also referred to as 'bevel gears'. The conical gears allow a drive train in which subsequent shafts are perpendicular or perpendicular with an additional tilt angle.

The various gears that are described in this document especially engage one another. This means that the gears may be meshing. The teeth of one gear meshes with the teeth of an engaging gear. In this way, the gears transmit torque.

It was found that the current wind turbine design allows converting mechanical energy generated by the wind turbine into electrical energy in such a way that the rotational speed of the turbine rotor shaft, coupling the turbine blades, is increased without the use of a conventional planetary gearbox. Mechanical energy is transferred to an electrical generator, for instance located at a position low in the tower. In this way a there is a substantial weight reduction of the wind turbine as a whole, but particularly in the upper housing or nacelle carrying the turbine rotor. If a proper conceptual design of the wind turbine is adopted, as will be described and claimed, some substantial further advantages in the controls and maintenance of the complete wind turbine can be obtained.

In the design, the mechanical energy is generated by the turbine rotor and is transferred to a vertical drive shaft system comprising two shafts. These shafts concentrically rotating at the same speed, but in opposite direction and having the possibility to give the turbine rotor shaft a slight tilt of some degrees.

The new design approach provides an advanced high power wind turbine in which the weight of the upper housing or nacelle, conventionally carrying the turbine rotor shaft and a gearbox, usually to equipped with a planetary gear system to increase the rotational speed of the turbine rotor by e.g. a factor of 3 to 5. The nacelle in such a conventional design also carries the electrical generator. In the current design, it will now in an embodiment only accommodate a rotor conical gear system not only transferring the mechanical energy to a vertical drive shaft system but also increasing the rotational speed of the vertical drive shafts by the same factor of 3 to 5. The mechanical energy is further transferred to preferably, but not necessarily, the lowest point in the tower.

It has been found in the design analysis that such solutions are feasible with the proposed rotor conical gear system/vertical shaft system and a double rotor electrical generator. Also the increase of rotational speed of the shafts to the electrical generator is obtained, on the one hand by proper selection of the size of the rotor conical gear system and the fact that two counter rotating electrical generator rotors in the electrical generator gives a double air gap speed compared to a conventional stator/rotor system. For this reason the proposed design reduces a number of heavy, maintenance sensitive, components like gear boxes but also reduces the weight of the electrical generator. It also brings this heavy component to a more appropriate place in the wind turbine.

Here, reference is made to 'coupling' which in most instances refers to 'rotationally coupling'. This can be seen a engaging each other in such a way that if one part starts rotating due to a force that is applied to it, the other part that is rotationally coupled also starts rotating, and transmits the rotational force. The conical gears are said to 'engage' one another. When referring to gears, this means that usually the teeth of gears are meshing. It transfers rotational force from one gear to the next.

In an embodiment, the first conical rotor gear has a first conical angle $\beta$, is coaxially coupled with said turbine rotor shaft and engages said conical first drive gear on said inner vertical drive shaft. In an embodiment, the second conical rotor gear has a second conical angle $\gamma$, is coaxially coupled to said turbine rotor shaft and engages said conical second drive gear on said outer vertical drive shaft. In an embodiment, the first conical rotor gear is concentric with said second conical gear. In an embodiment, the first conical angle β and said second conical angle γ have a different angle. In particular they differ a tilt angle α of between 1° and 10°. This allows coupling said turbine rotor shaft to said inner and outer vertical drive shaft at said angle differing from perpendicular as explained. Thus, in fact, with the drive shafts rotational axis at an angle of between 91° and 100° with respect to the turbine rotor shaft rotational axis, i.e., perpendicular with a tilt angle added to it. The cone-ring of the conical gears can be continued virtually and come together in a set of four (virtual) apices that are on an intersection of the turbine rotor shaft rotational axis and the vertical drive shaft rotational axis. In an embodiment, the teeth of the first conical gear and the teeth of the second conical rotor gears are concentric. It allows an easy and flexible design.

The first and second conical rotor gears may be mounted directly on the turbine rotor shaft. Alternatively, these conical rotor gears may be mounted on a separate shaft that is coupled to the turbine rotor shaft. In such an embodiment, the shaft holding the conical rotor gears and the turbine rotor shaft may be coupled via a gearbox, or via a spline-provision allowing these shafts to move with respect to one another in their longitudinal direction, or a combination thereof.

In an embodiment, the first conical turbine rotor gear and said second conical rotor gear are mounted at mutually different distances to said drive shafts rotational axis. The distance depends on the desired tilt angle, the rated power of the wind turbine, and the diameter of the gears.

In an embodiment, the first conical turbine rotor gear is mounted at a larger distance from said drive shafts rotational axis than said second conical rotor gear. The larger distance allow a tilting of the turbine rotor shaft. An angle between the rotor shaft rotational axis and the drive shafts rotational axis may thus differ from an exact 90° angle.

In an embodiment, the first conical rotor gear and said second conical rotor gear are mounted at mutually different distances to said drive shafts rotational axis. This allows setting a tilt angle.

In an embodiment, a first gearing ratio of said first conical rotor gear and said first conical drive gear and a second gearing ratio of said second conical rotor gear and said second conical drive gear are substantially the same. Making the gearing ratio's substantially the same makes damping if vibrations and oscillations in the vertical drive shafts easier. In particular, the gearing ratio's are the same, allowing damping, as explained below.

In an embodiment, the second conical rotor gear has a larger diameter than said first conical rotor gear. Again, it facilitates tilting of the turbine rotor shaft. The diameters depend on a rated power of the wind turbine, but may The diameters may e.g. be in the range of 0.5-2 meters, depending an a rated power of the wind turbine.

It should be clear that the first and second conical rotor gear can be two separate gears that are coupled. Alternatively, they may be integrated in a single element having two sets or rings of teeth. These rings are concentric rings of teeth.

There are two main reasons why it may be desired to give the (horizontal) rotor shaft a small tilt. One reason is the fact that, in general and on the average, the wind speed increases with height and, due to the influence of the turbine itself, gets a small vertical component. Therefore, when the horizontal axis is given a small tilt, the turbine blade, on the average, will during the whole of the rotation see a constant axial wind speed. The second reason is that the vertical tower carrying the turbine will influences the wind speed and its direction in the direct vicinity. The turbine/rotor blade will, upon passing by the tower see a disturbed wind field which is being translated into varying loads of the wind turbine. This effect reduces when the distance between the tower and the rotor blade increases. For this reason the tilt will add to a reduction of the varying load.

To allow tilting of the horizontal axis two concentric gear wheels are provided in the gear system of the horizontal rotor shaft. In an embodiment, an outer gear drives the outer vertical drive shaft and an inner gear, which lies deeper in the wheel and, obviously, has a smaller diameter that the outer gear. This inner gear drives the inner vertical drive shaft. By making sure that the difference between the conical angles of the outer gear and the inner gear wheel is equal to the tilting angle, both rotational speed and torque transferred to both vertical drive shafts are the same. In the practice of connecting gears it means that the number ratio of teeth of the large rotor and the conical wheel of both gear systems will be the same.

From design and construction point of view there is not always freedom of choice for the tilt angle. This can be illustrated in the following calculation example, starting from teeth in the conical gears having a base of 20 mm, a tilt angle of 1/15 of a radial, which corresponds to 3.82 degrees of tilt, and an acceleration factor of 5. The gear teeth are here supposed to be the same for all conical gears. This requirement results into 5 x 45 = 225 teeth in the second conical rotor gear and 45 teeth in the corresponding second conical drive gear. In this example, the second conical rotor gear thus has a nominal diameter of 143 cm, and the second conical drive gear has a nominal diameter of 28 cm. The first conical drive gear has 42 teeth and will be 26.75 cm in diameter, and the first conical rotor gear thus has 210 teeth. If the second conical rotor gear has a diameter of 143 cm, the width of the second conical rotor gear is 4.7 cm, or, rather, the first conical rotor gear has an outer boundary at 4.7 cm of the outer circumference of the second conical rotor gear. Due to the tilting of the turbine rotor shaft, the first conical rotor gear will lie 8.25 cm further away from the drive shaft rotational axis than the second conical rotor gear. This means that at this place the diameter of the inner vertical drive shaft should not exceed 26.75 - 2 x 8.25 = 10.25 cm. Obviously, the value for the width of 4.7 cm should not directly translate into a gear width. The second conical rotor gear can be extended outwards by a few cm as well as the first conical rotor gear can into the inner direction. This can also be interpreted as giving more freedom in the choice for the value of the base of the gear teeth. Another option is to meet the requirement on the difference between the conical angles of both conical gears is to allow the conical rotor gear to have different sizes of the teeth with respect to one another, and to keep the number of teeth the same.

The electrical generator is coupled to the inner and the outer drive shafts. In an embodiment, the electrical generator comprises the inner generator rotor coupled to the inner vertical drive shaft and the outer generator rotor coupled to the outer generator rotor. This provides a simple construction. In an embodiment, an air gap is provided between the inner and outer generator rotor. Thus, the rotational speed of the turbine rotor is directly doubled in the electrical generator. An easy construction is possible when the drive shafts rotational axis is in line with a rotational axis of the electrical generator rotors. The electrical generator rotors and the vertical drive shafts are in fact coaxial.

In an embodiment, the electrical generator comprises a generator housing allowing fixing to a fixed reference frame of said wind turbine, said outer generator rotor rotatably about an electrical generator rotational axis mounted in said generator housing, and said inner generator rotor mounted rotatably with respect to said housing and said outer generator, with an air gap between said outer and inner generator rotors.

In an embodiment, the inner generator rotor carries permanent magnets.

The upper conical gear system is supposed to increase the rotational speed of the vertical drive shafts by a factor of three compared to the rotational speed of the rotor shaft. The electrical generator will comprise two counter rotating generator rotors, preferably as two concentric generator rotors. In such a case the relative air gap speed is increased by another factor of two compared to a conventional rotor/stator system in which one of these components is not rotating. Therewith benefit is taken from the fact that we have a two counter-rotating vertical drive shafts.

Another important fact is that the moments of inertia of the two generator rotors may in an embodiment be different which is especially a condition for the suppression of the vibrations of the two rotor/vertical drive shaft systems. This will be made clear in the next section.

In an embodiment, a design of the electrical generator will be based on the idea that the stator/rotor system is a synchronous machine in which both elements are counter rotation such that the stator, connected to the inner vertical shaft accommodates coils delivering their power to the external grid by (three) sliding contacts through for instance an active front end rectifier. The generator rotor in an embodiment carries the permanent high remanent magnets, although they can also operate by coils generating magnetic fields in the air gap. The load factor of such a machine of for instance 800 Kilowatts with a four quadrant inverter is of the order of 0.8 which leads to building size of 1MVA and equal capacity of the inverter with a voltage in the coils of 400 Volts. Both stator and rotor are carried by a carrousel which can freely rotate by bearings at the place where they are connected to the vertical drive shafts and the lower plate of the generator housing. Eventually, since the rotor and "stator" (in fact, the second generator rotor) are rotating in opposite directions, the number of pairs of magnetic poles can for instance be reduced by a factor of two in comparison to a machine, rotating at equal speeds, but in which the stator is, as usual, not moving. In the current design in which the electrical generator comprises two counter rotating elements, the "stator" and the rotor, none of these exert force to the generator housing which consequently does not allow moving the nacelle in the horizontal plane. This can in an embodiment be accommodated in an embodiment by means of a design that uses three active elements in the current electrical generator: two counter rotating rotor carrying the permanent magnets and one stator connected to the frame carrying the coils. The nacelle can be rotated to and from the wind direction by electrically loading the rotors differently. In that case the sliding contacts will not be necessary.

In an embodiment, the inner and outer vertical drive shafts are segmented into inner and outer drive shaft segments. In particular said drive shaft segments are between 5 and 10 meter long. In this trade off, the drive shaft segments can be transported easily, can be handled in a tower, but still allow larger wind turbines having a limited number of segments.

In an embodiment, the inner and outer vertical drive shaft segments have an equal pitch, allowing simultaneous removal of an inner and corresponding outer drive shaft segment from said inner and outer vertical drive shaft in a direction substantially transverse to said drive shaft rotational axis. The inner and outer vertical drive shaft segments may also be referred to as being in register.

In an embodiment, the inner and outer vertical drive shaft segments comprise ends provided with respective inner and outer segment coupling parts.

In an embodiment, the outer segment coupling part comprises a filling part and an outer segment coupling end, said filling part extending between subsequent outer segment coupling ends of subsequent vertical drive shaft segments.

In an embodiment, the outer vertical drive shaft comprises at least one bearing or positioning wheels, on one side bearing against on an outer surface of at least one said outer segment coupling part.

In an embodiment, the inner vertical drive shaft segments at both ends extend beyond said outer drive shaft segments.

Further, the drive shaft system should be designed in such a way that the most fragile element, the inner and outer vertical drive shafts comprise segments in the form of prefabricated parts which in the form of spare units can be accommodated in the tower and easily replaced in the case of failure if safety precautions have not shown appropriate.

In an embodiment, the vertical drive shaft system is designed such that, at a given torque, both the inner and outer drive shaft will have the same rotational defection. This condition will be made clear when a suppression of the mechanical oscillations in such a vertical drive shaft system is presented. The local rotational deflection is expressed as a deflection angle which is proportional to the distance of the location to the center of the shaft. In an embodiment, the inner and outer vertical drive shafts are hollow. If the shaft material extends from $R_i$ to $R_u$ (The inner radius to the outer radius), the local value of the torque is given by:

$$T = a.r$$

Where 'a' is directly proportional to the angle of the gliding. The total torque over the entire cross section of the shaft is given by:

$$T(total) = \text{integral over } R_i \text{ to } R_u \text{ of } 2.\pi.a.r^2.dr, \tag{1}$$

and therefore:

$$T = a'(R_u^3 - R_i^3). $$

So that for both vertical drive shafts the condition is that:

$$(R_u^3 - R_i^3)_{\text{inner vertical drive shaft}} = (R_u^3 - R_i^3)_{\text{outer vertical drive shaft}}. \tag{2}$$

This condition leads to different values of the weight of the two (inner and outer) concentric vertical drive shafts, according to:

$$M(mass) = length.\pi.density.(R_u^2 - R_i^2)_{\text{outer/inner vertical drive shafts}}. \tag{3}$$

The wall thickness of the inner vertical drive shaft is larger than the thickness of the outer vertical drive shaft and, in such a way, that the outer vertical drive shaft is lighter that the inner vertical drive shaft.

Obviously, the leading point is that the deflection is constant, so that the first condition, expressed in equation 2, is to be fulfilled.

It was thus found that in an embodiment the vertical drive shafts are segmented in pieces of 5-10 meter. This allows easy handling and to make repairs of the drive shafts when necessary.

In an embodiment, both inner and outer segments comprise end flanges. These may be fabricated out of light weight fibre reinforced polymers. In particular, the segments comprise tube parts. These tube parts can be provided with coupling end for assembling segments into a vertical drive shaft. At one end of an inner vertical drive shaft tube part a coupling end that is provided with a flange will be glued on the vertical drive shaft tube part in order to mount an inner and outer shaft segment within each other after putting bearings, for instance ball bearings, into place. The outer shaft segment also will have flanges which encloses the flange of the inner shaft segment. This outer flange-like box has holes to give access to bolts connecting adjacent inner flanges. The system provides a pre-fabricated drive shaft system which can be brought to the wind turbine for instance when it is being build up, and screwed into place. The drive shaft system may be positioned in the tower by bearings, for instance ball bearings.

In an embodiment, to keep the vertical drive shafts straight, the inner and outer drive shafts are suspended on the two conical gears and of the rotor gear system. The lower connection of the vertical drive shafts with the electrical generator may have a spline connection, to allow axial displacements of the inner and outer vertical drive shafts and the electrical generator elements with respect to one another.

In an embodiment, the wind turbine further comprises a damping system for damping oscillations between a first drive train comprising the outer vertical drive shafts and the generator rotor coupled to the outer vertical drive shaft and a second drive train comprising the inner vertical drive shaft and the generator rotor coupled to the outer vertical drive shaft, said damping system comprising a differential having opposite first and second damper shafts and a resultant damper shaft arranged for in operation having an angular velocity that is the sum of the rotation of the first and second damper shafts, said first and damper shafts coupled to respective said first and second drive train, and said resultant damper shaft coupled to an energy dissipater.

In an embodiment, the first and second damper shafts are coupled to said respective first and second drive train via a chain drive or a belt drive. In an embodiment, coupling comprises a toothed belt and gears.

In an embodiment, the differential comprise two sets of opposite, intermeshing conical gears in an inner damper housing, with said first and second damped shafts coupled to opposite conical gears of one of said set of conical gears. In an embodiment, at least one of said conical gears of said other set of conical gears coupled to said inner housing, and said inner housing is rotatably accommodated in an outer damper housing. In an embodiment, said energy dissipater is provided between said inner damper housing and said outer damper housing.

To prevent a reactive torque by the vertical drive shafts to the nacelle, two concentric and oppositely rotating vertical drive shafts are used, as explained. Since the vertical drive shafts are coupled to respective generator rotors with high but different moments of inertia, in an embodiment the wind turbine comprises the damping system or a device to suppress any torsional vibrations of the vertical drive shafts. This damping system should preferably only absorb the oscillation energy and not any part of the actual power generated by the wind turbine.

The system of the two generator rotors in the electrical generator, the two coaxial vertical drive shafts and the conical gears constitutes a coupled harmonic oscillation system described by three non-independent differential equations:

$$J_1.D_{tt}U_1 + K_1(U_1 - U_0) + N(D_tU_1 - D_tU_2) = 0 \qquad (4a)$$

$$J_2.D_{tt}U_2 + K_2(U_2 - U_0) + N(D_tU_2 - D_tU_1) = 0 \qquad (4b)$$

$$J_0.D_{tt}U_0 - K_1(U_1) - K_2(U_2) + (K_1 + K_2)U_0 = 0 \qquad (4c)$$

In which $U_i$ are the rotational oscillation displacement of the rotor and the main conical gear system. $J_i$ the moments of inertia, $K_i$ the stiffnesses of the two drive shafts, N is the damping constant of a later to be defined damping precaution between the two rotors, and $D_t$, $D_{tt}$ short-hand representations of first and second time derivative operators.

The solution of this system of differential equations is beyond the scope of this description, but one can show, assuming for the moment that there is no damping, i.e. N = 0, that the two oscillators will oscillate at two characteristic frequencies, one in-phase and one out-of-phase, of which one is damped in the present system. However if the damping precaution is active, both in-phase and out-of-phase oscillations will, depending on the value of N, see a declining amplitude. So the damping system generates at the same time the damping condition and the actual damping.

In an embodiment the wind turbine comprises a damping system in which two opposite movements of the generator rotors/drive shafts systems add up such that the pure oscillations remain as the movement to be damped and be transferred into heat. The power in such oscillations, although small in comparison with the capacity of the windmill, but still substantial, will have to be transferred in a device which can be cooled and such that the energy dissipation occurs in a volume as large as the device itself. This latter condition prevents hot spots in such a device.

The adding up of the two movements can be achieved in a so-called 'differential' or "differential device". This differential comprises in an embodiment four conical gears acting in a square fashion. A first set of two opposite conical gears may be coupled to the generator rotors by geared belts. A second set of two opposite conical gears acting at square angles to the previously mentioned set of opposite conical gears drive a frame or housing of the differential. In such a case the movement of the differential housing is proportional to the in-phase movement of incoming oppositely rotating shafts coupled to the respective conical gears of the first set of opposite conical gears. This differential housing in turn is rotationally accommodated in an enclosure or damping system housing in which it can rotate freely, about a rotational axis that is in-line with rotational axes of the opposite rotating shafts. This freely rotatable differential housing is in an embodiment connected to a set of stacked plates. These stacked plates of the set of stacked plates are positioned between a further set of fixed plates, stationary with respect to the damping system housing. The plates are mounted in such a way that alternatingly, a rotatable and fixed plate is provided. The plates are thus mounted in such a way that a high interaction surface between the (in operation) rotating and non-rotating plates is obtained. The whole system is immersed in a viscous liquid, for instance in oil. The energy of the in-phase oscillatory movement of the two rotors is converted into heat by viscous friction over the entire rotating/stationary plates of the damping system. The heated oil is for instance easily cooled by a water flow though the housing, or via a heat exchanger.

The damping on the basis of viscous friction energy dissipation is very effective in this particular case on the basis of the following consideration. The energy stored in an oscillation with amplitude $A_i$ is given by:

$$Q_n = B(A_i - A_0)^2_n. \tag{6}$$

Where B replaces combined factors as frequency, moment of inertia, etc. The index n indicates the $n^{th}$ half period of the oscillation. For an un-damped oscillation the indication of the $n^{th}$ value has no meaning as the energy Q remains constant. But if there is damping the total energy $Q_n$ of the $n^{th}$ half period will be larger than the energy $Q_{n+1}$ of the n+1$^{th}$ half period, so that the energy balance is given by:

$$Delta\ Q = B(A_i - A_0)^2_n - B(A_i - A_0)^2_{n+1} = B'(A_i - A_0)_n - B'(A_i - A_0)_{n+1}. \tag{7}$$

In which the deposition of energy by viscous friction is given by the last part of the equation. B' stands for the specific parameter to describe the intensity of the frictional heat deposition: number of plates, surface area, viscosity of the oil and force applied perpendicularly to the stacked plates. Solving this equation gives:

$$B''(A_i - A_0)_n + B''(A_i - A_0)_{n+1} = constant. \tag{8}$$

This means that in each half period a constant value of the amplitude is damped away. The second term on the left hand side of equation 8 is to be chosen of opposite sign to the first term as the energy balance concerns half periods of oscillation, where the friction force does not change sign. A damper device can be constructed which ensures complete damping in a predetermined number of half periods of oscillation.

In an embodiment, the turbine rotor is coupled to said turbine rotor shaft, or the turbine rotor shaft is coupled to the rotor gear system, via a shock absorbing system for absorbing shocks having a main component parallel to said turbine rotor rotational axis. In an embodiment, said shock absorbing system comprising a spline coupling.

In an embodiment, the turbine rotor is allowed to move in axial direction along its rotational axis. In an embodiment, the rotational force is transferred to the turbine rotor shaft by splines while the axial movement of the turbine rotor is limited by a number of shafts at its circumference and which are equipped with springs and shock dampers. Such a precaution will enable to keep the conical rotor gears that are coupled to the turbine rotor shaft at their axial position with respect to the first and second conical rotor gears coupled to the inner and outer vertical drive shaft.

The conversion of wind energy does not only make the turbine rotor rotate, but also exert an axial force on the turbine rotor shaft to which the turbine rotor blades are coupled.

Fluctuations in the pressure due to varying wind force will lead to large variations in the axial force on the turbine rotor shaft. Also, as will be clear from the further description of this system, the transfer of the mechanical energy to the vertical drive shaft system requires accurate positioning of the conical rotor gears towards the two conical drive gears. Therefore, as an extra precaution, in an embodiment the shock absorbing system is accommodated in the connection between a shaft carrying the turbine rotor blades and the rotor gear system. It means that the shaft carrying the turbine rotor blades can move to a certain extent in axial direction by sliding over or towards the conical rotor gears. This movement is in an embodiment limited by a combined spring/shock absorbing system. It may be integrated in the system with bearings for the turbine rotor shaft. Any tilt of this shaft will by no means influence the working principle of such a shock absorbing system.

The moving of the turbine towards the wind ('yaw') can be integrated in the generator/rotor gear system. In such an embodiment, the generator may comprise three active elements. Two rotors carrying elements to generate a magnetic field in two air gaps and one stator equipped with the coils in which electrical power can be generated. In such an embodiment, two concentric rotors may comprise the stator concentrically between them. Thus, in fact two air gaps are created. The stator can be coupled to the nacelle that is rotatably in turn coupled to the tower. Thus, in fact, the stator of not completely, as its name would suggest, static or stationary with respect to the tower or fixed world.

In an embodiment, the electrical generator can be energized such that no severe stresses in the wind turbine can occur due to uneven accelerations in the wind turbine when turning it on. This is to be achieved by sensors recording a torsional deflection of the vertical drive shafts, and which give feedback for temporarily powering the electrical generator. This torsion control system will also operate to control any overstressing due to differences in acceleration of the various components in the transmission line, i.e. the turbine rotor/turbine rotor shaft/rotor gear system/vertical drive shafts/electrical generator during gusty wind conditions.

In an embodiment, the wind turbine further comprises:

- a sensor system for determining a torque on at least one of said inner and outer vertical driving shafts, and:
- a controller, functionally coupled to said sensor system and to a power source, said controller adapted for providing electrical power from said power source to said electrical generator for adapting said electrical generator to exert an electrical generator torque to at least one of said inner and outer vertical driving shafts in response to said determined torque.

The vertical drive shafts will, under normal and off-spec operation, show high deflections due to torsion. This deflection angle is a direct and accurate measure of the load applied by the wind turbine to the transmission line. In this design, the vertical drive shafts can be a heavy element if it is designed with a substantial safety factor. On the other hand, damping of the vibrations is facilitated if the deflection angles due to torsion are not too small. Depending on the length of the vertical drive shafts, a total deflection of between 10 and 30 degrees is assumed to be a reasonable value. The amplitude of the torsion vibration are, in this respect, assumed to be about 20% of this values at the maximum, preferably no higher than 5%. For these reasons the vertical drive shaft system is assumed to be the weakest link in the wind turbine.

In an embodiment, the vertical drive shaft system of the inner and outer vertical drive shaft in an embodiment comprises inner and outer drive shaft segments. These segments in en embodiment are, when failed, easily replaced. In a further embodiment, the drive shaft system, due to the fact that deflection angles are relatively high and easily recorded, also comprises a sensor controlled feed-back arrangement which influences the load on the electrical generator in such a way that the full inertia of the turbine rotor under varying wind conditions do not lead to overstressing of the vertical drive shaft system. In an embodiment, the load of the generator is reduced such that the torsion of the vertical axis remains below the maximum value if the sensor records a deflection angle exceeding a certain limit.

In a further embodiment of the sensor controlled system, the generator is externally powered to prevent overstressing of the vertical axis system upon starting up of the system, when full wind capacity is available but the generator's rotational speeding up cannot follow such acceleration.

On top of this, a weakest link can be accommodated in the transmission line at an easily accessible location such that the connection of the turbine rotor with the transmission line is interrupted. In an embodiment, such a device can be readily accommodated at the connection between the conical drive gears and the two drive shafts leaving a rotor gear housing to be connected to the (polymeric) inner and outer vertical drive shaft. For instance, a (set of) breaking coupling can be provided in the transmission line between the turbine rotor and the vertical drive shaft system. These precautions may have the following operational requirements and characteristics:

1. During start up the sensor records the deflection angle and controls activation/ energization of the electrical generator to accelerate in pace with the acceleration of the turbine rotor itself and therewith preventing overstressing of the vertical drive shafts. During gusty wind conditions the sensor records the deflection angle and influences the load on the electrical generator such that the rotational speed of the generator rotors keep up with the varying wind turbine rotating speed.

2. Under excessive conditions where the overstressing is that high that the controls are not capable of keeping the torsional stresses with limits, the weakest link will break and prevent damage to the transmission line turbine rotor/vertical drive shafts/generator rotor. The wind turbine will be off-duty until the weakest link will again connect the rotor gear system with the vertical drive shafts.

The invention further relates to a method for controlling a wind turbine as defined herein, comprising determining a torque on at least one of said driving shafts, calculating an amount of electrical power to be applied to said electrical generator in response to said determined torque, and applying said calculated electrical power to said electrical generator. This especially implies that overstressing the wind turbine during start-up and gusty wind conditions may be limited or even prevented. The torque may be measured directly, but may also be determined indirectly, for instance from wind speed, in combination with historical data or looking up torque values in a database base on the wind speed, for instance. Other methods for determining, deriving and/or measuring torque can be considered. Using the values, or for instance a time-based set of values, the torque may also be predicted, allowing an even better response time for compensation possible excessive torque. The method may keep the actual torque on the vertical drive shafts within a set range of torque values. In an embodiment, the method keeps the actual torque below a structural limit of the vertical drive shafts.

The invention further relates to a computer program product which, when running on a computer system, allows said computer system to operate as a controller in a wind turbine according to any one of the preceding claims. In an embodiment, the computer program instructs said computer system to:

- determining a torque on at least one of said drive shafts;
- calculating an amount of electrical power to be applied to said electrical generator in response to said determined torque.

The invention further relates to a wind turbine, comprising:

- a rotor;
- a rotor shaft coupled to said rotor;
- a first drive shaft coupled to said rotor shaft at an angle;
- a generator for converting mechanical rotational energy of said rotor into electrical energy, with said first drive shafts coupled to said generator,

wherein said wind turbine further comprises:

- a sensor system for determining a torque on said first driving shaft, and
- a controller, functionally coupled to said sensor system and to a power source, said controller adapted for providing electrical power from said power source to said generator for adapting said generator to exert a generator torque to said first driving shafts in response to said determined torque.

The invention in an aspect relates to a wind turbine comprising a system for damping torsional oscillations in a mechanically coupled shaft/generator rotor system accommodating also cooling away of heat generated by the transfer of mechanical oscillatory movement into heat.

In a further aspect, invention pertains to a wind turbine, comprising a turbine rotor shaft coupled to a turbine rotor and defining a rotor rotational axis, said turbine rotor comprising a set of turbine rotor blades, an outer vertical drive shaft and an inner vertical drive shaft coaxially within said outer vertical drive shaft, a rotor gear system coupling said inner and outer vertical drive shaft to said turbine rotor shaft, and an electrical generator coupled to said inner and outer vertical drive shaft for converting mechanical energy of said turbine rotor into electrical energy, said electrical generator comprises a generator housing allowing fixing to a fixed reference frame of said wind turbine, said outer generator rotor rotatably about an electrical generator rotational axis mounted in said generator housing, and said inner generator rotor mounted rotatably with respect to said housing and said outer generator, with an air gap between said outer and inner generator rotors.

In a further aspect, invention pertains to a wind turbine, comprising a turbine rotor shaft coupled to a turbine rotor and defining a rotor rotational axis, said turbine rotor comprising a set of turbine rotor blades, an outer vertical drive shaft and an inner vertical drive shaft coaxially within said outer vertical drive shaft, a rotor gear system coupling said inner and outer vertical drive shaft to said turbine rotor shaft, and an electrical generator coupled to said inner and outer vertical drive shaft for converting mechanical energy of said turbine rotor into electrical energy, further comprising

- a sensor system for determining a torque on at least one of said inner and outer vertical driving shafts, and:
- a controller, functionally coupled to said sensor system and to a power source, said controller adapted for providing electrical power from said power source to said electrical generator for adapting said electrical generator to exert an electrical generator torque to at least one of said inner and outer vertical driving shafts in response to said determined torque. This allows less torque to the relatively vulnerable system of vertical drive shafts.

In a further aspect, invention pertains to a wind turbine, comprising a turbine rotor shaft coupled to a turbine rotor and defining a rotor rotational axis, said turbine rotor comprising a set of turbine rotor blades, an outer vertical drive shaft and an inner vertical drive shaft coaxially within said outer vertical drive shaft, a rotor gear system coupling said inner and outer vertical drive shaft to said turbine rotor shaft, and an electrical generator coupled to said inner and outer vertical drive shaft for converting mechanical energy of said turbine rotor into electrical energy, wherein said inner and outer vertical drive shafts are segmented into inner and outer drive shaft segments. In particular said drive shaft segments are between 5 and 10 meter long. The vertical drive shafts were found to be a vulnerable part of the wind turbine. Making the parts easy reparable proves easier than making the shafts able to resist all possible forces.

In a further aspect, invention pertains to a wind turbine, comprising a turbine rotor shaft coupled to a turbine rotor and defining a rotor rotational axis, said turbine rotor comprising a set of turbine rotor blades, an outer vertical drive shaft and an inner vertical drive shaft coaxially within said outer vertical drive shaft, a rotor gear system coupling said inner and outer vertical drive shaft to said turbine rotor shaft, and an electrical generator coupled to said inner and outer vertical drive shaft for converting mechanical energy of said turbine rotor into electrical energy, further comprising a damping system for damping oscillations between a first drive train comprising the outer vertical drive shafts and the generator rotor coupled to the outer vertical drive shaft and a second drive train comprising the inner vertical drive shaft and the generator rotor coupled to the outer vertical drive shaft. It was found that the system of inner and outer vertical drive shafts can comprise oscillations.

In an embodiment, said damping system comprising a differential having opposite first and second damper shafts and a resultant damper shaft arranged for in operation having an angular velocity that is the sum of the rotation of the first and second damper shafts, said first and damper shafts coupled to respective said first and second drive train, and said resultant damper shaft coupled to an energy dissipater. This provides a relatively simple, self controlling damping system.

In a further aspect, invention pertains to a wind turbine, comprising a turbine rotor shaft coupled to a turbine rotor and defining a rotor rotational axis, said turbine rotor comprising a set of turbine rotor blades, an outer vertical drive shaft and an inner vertical drive shaft coaxially within said outer vertical drive shaft, a rotor gear system coupling said inner and outer vertical drive shaft to said turbine rotor shaft, and an electrical generator coupled to said inner and outer vertical drive shaft for converting mechanical energy of said turbine rotor into electrical energy, further comprises a turbine rotor is coupled to said turbine rotor shaft via a shock absorbing system for absorbing shocks having a main component parallel to said turbine rotor rotational axis, said shock absorbing system comprising a spline coupling between said turbine rotor and said turbine rotor shaft.

In an embodiment, the turbine rotor is allowed to move in axial direction along its rotational axis. In the transmission line, the turbine rotor is coupled to the rotor gear system via a spline coupling. In an embodiment, the rotational force is transferred to the turbine rotor shaft by splines while the axial movement of the turbine rotor is limited by a number of shafts at its circumference which are equipped with springs and/or shock dampers. Such a precaution will enable to keep the conical rotor gears at their axial position with respect to the conical drive gears of the rotor gear system.

In an embodiment, the invention pertains to drive shaft system comprising an inner drive shaft and an outer drive shaft coaxial with said inner drive shaft, said drive shaft system comprising drive shaft segments comprising prefabricated concentric, high strength fiber reinforced polymer inner and outer tube parts having ends provided with respective inner and outer coupling parts for coupling said inner tube parts and said outer tube parts, and comprising bearings for fixing said inner drive shaft and outer drive shaft in lateral direction, said bearings provided between the inner and outer and vertical drive shaft, each bearing engaging an outer surface of the inner coupling part and an inner surface of the outer coupling part, and said inner and outer tube parts in register. In fact, the drive shaft segments have a substantially equal pitch. Thus, segments can be replaces in a construction comprising the drive shaft system.

In an embodiment, the invention pertains to an electrical generator comprising two in operation counter rotating rotors, the inner one of which carries (high remanent) permanent magnets and the other one coils, the rotors separated by an air gap over which the speed is doubled in comparison with a classical stator/rotor system thanks to the counter rotating speeds of both rotors.

The invention further pertains to device for damping away the torsion vibrations that occur in the long vertical shafts, here also referred to as 'damping system'.

The invention further pertains to a wind turbine comprising a turbine rotor, a turbine rotor shaft coupled to said turbine rotor, a vertical drive shaft system coupled to said turbine rotor shaft at an angle of between 100° and 80°, an electrical generator for converting mechanical rotational energy of said turbine rotor into electrical energy, said electrical generator coupled to said vertical drive shaft system, wherein said wind turbine further comprises a sensor system for determining a torque on said vertical drive shaft system, and a controller, functionally coupled to said sensor system and to a power source, said controller adapted for providing electrical power from said power source to said electrical generator for adapting said electrical generator to exert a generator torque to said vertical drive shaft system in response to said determined torque.

The term "substantially" herein, such as in "substantially conical" or in "substantially vertical", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. The term "and/or" especially relates to one or more of the items mentioned before and after "and/or". For instance, a phrase "item 1 and/or item 2" and similar phrases may relate to one or more of item 1 and item 2.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

**Brief description of the drawings**

Embodiments of the invention will now be described, by way of example only, with reference to the accompanying schematic drawings in which corresponding reference symbols indicate corresponding parts, and in which:

Figure 1 schematically depicts a wind turbine with an outer and inner vertical drive shaft;
Figures 2 and 2A show a rotor gear system coupling said outer and inner vertical drive shafts to said turbine rotor shaft, in figure 2 in perspective and partly cross sectional view, figure 2A in cross sectional view;
Figure 3 shows an electrical generator for converting mechanical rotational energy of said rotor into electrical energy, in cross sectional view;
Figures 4 and 4A show part of a segmented drive shaft system with an outer vertical drive shaft and an inner vertical drive shaft coaxially within said outer vertical drive shaft, in figure 4 cross sectional view and in figure 4A in perspective view,
Figure 5 shows a damping system for damping torsion oscillations between the systems comprising the outer vertical shaft/outer generator rotor and the inner vertical shaft/inner generator rotor in cross sectional view, and
Figure 6 shows the torsion control system in schematic view.

The drawings are not necessarily on scale.

**Description of preferred embodiments**

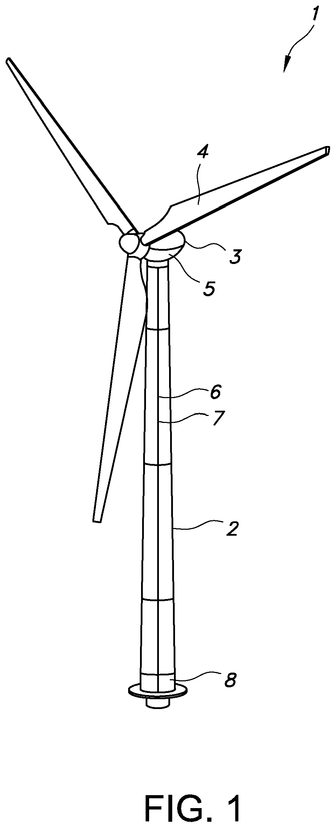

Figure 1 schematically shows an example of a wind turbine of the current invention. The wind turbine 1 has a tower 2. Tower 2 carries a nacelle 3. Nacelle 3 rotatably holds a turbine rotor 4. In order to allow positioning the turbine rotor 4 in the wind, the nacelle 3 can be mounted rotatably on the tower 2, allowing setting a yaw angle of said nacelle 3.

The current design of the wind turbine was found to be in particular advantageous in a wind turbine having a capacity of between 100 kW and 10 MW. In figure 1 an upwind wind turbine is illustrated, but the current design may also be applied to a downwind wind turbine.

In this embodiment, the nacelle 3 houses a rotor gear system or rotor gearing 5 that transfers the rotation of a turbine rotor shaft onto vertical drive shafts 6, 7. The vertical drive shafts 6, 7 in turn transfer the rotation of the turbine rotor 4 onto an electrical generator 8. Here, the electrical generator 8 is mounted at the bottom of the tower 2. In the current embodiment, the wind turbine comprises an inner vertical drive shaft 6 and an outer vertical drive shaft 7 which is coaxial to the inner vertical drive shaft. In particular, the inner and outer drive shafts 6, 7 are coupled to the turbine rotor 4 in such a way that in operation, these vertical drive shafts 6, 7 rotate about their common longitudinal axis in opposite direction and at the same rotational speed. It is evident that in this context, 'vertical' in the 'vertical drive shafts' refers to their orientation in operation, which orientation is vertical with respect to the fixed surface. Usually, the longitudinal axis of tower 2 will coincide with the rotational axis of the inner and outer vertical drive shafts. This will also simplify the rotational mounting of the nacelle 3 on the tower 2. Often, the jaw movement of the nacelle 3 is actuated using a separate jaw angle actuator. In fact, such a construction and jaw angle actuator are known to a skilled person.

Details of an embodiment of the rotor gear system 5, the vertical drive shafts 6, 7 and of the electrical generator 8 will be explained in the following drawings, together with many other details.

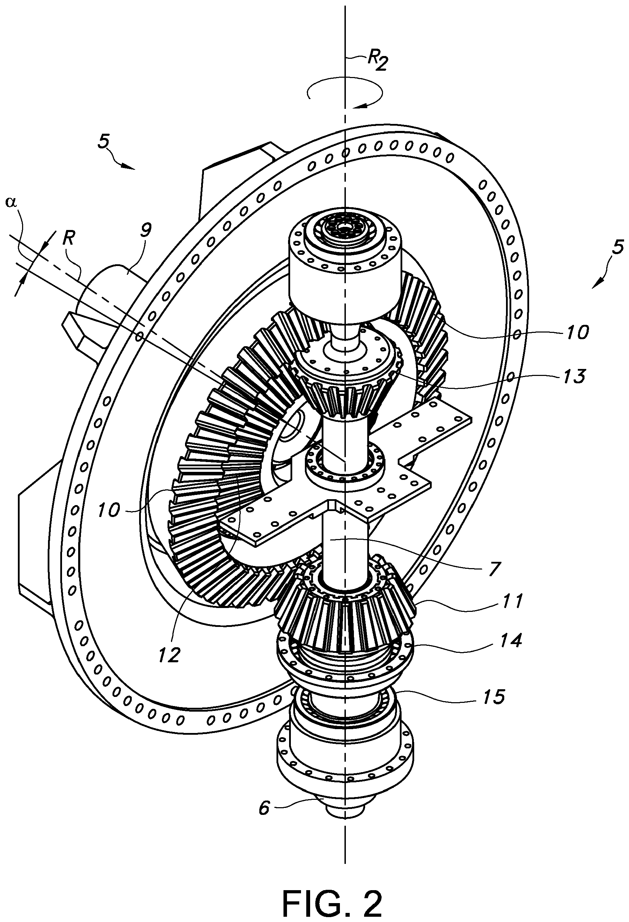

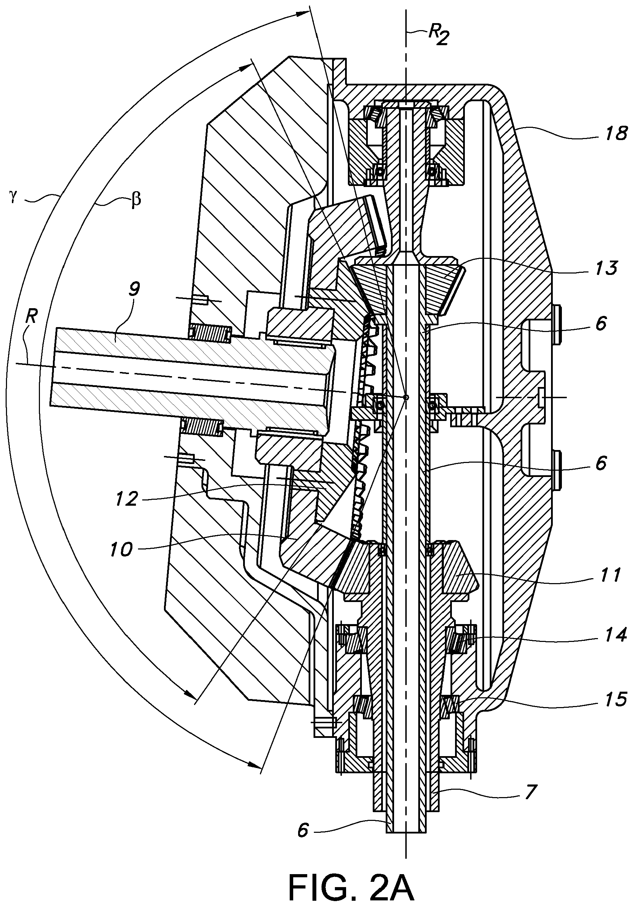

In figure 2, a three dimensional or perspective, partially cut away drawing of an embodiment of the rotor gear system 5 that transfers the rotational motion of a turbine rotor shaft 9 onto the outer vertical drive shaft 6 and inner vertical drive shaft 7 is shown. In figure 2A, the rotor gear system 5 of figure 2 is shown in a cross sectional view, along a plane defined by a rotor shaft rotational axis R and a drive shaft rotational axis R2. The turbine rotor shaft 9 has a rotor shaft rotational axis R. The inner vertical drive shaft 7 and the outer vertical drive shaft 6 have a common drive shaft rotational axis R2. The turbine rotor shaft 9 is at one end coupled to a turbine rotor 4 (not shown in fig. 2). The turbine rotor 4 may be coupled to the turbine rotor shaft 9 via a gearbox. The rotor gear system 5 here comprises a housing that also holds various bearings for the inner vertical drive shaft 7 and the outer vertical drive shaft 6. A smaller housing may also be considered and which excludes these bearings.

At its other end, turbine rotor shaft 9 is coupled to the rotor gear system 5. This rotor gear system 5 allows the turbine rotor shaft 9 to be coupled to the outer vertical drive shaft 6 and to the inner vertical drive shaft 7 at a tilt angle α away from a perpendicular (90°) coupling. The tilt angle α is important in that allows an increase of the distance between the tower and the rotor (tip), thus reducing the disturbing influence of the tower on the rotor. Furthermore, usually the wind speed increase with height. Introducing a tilt angle α at least partially elevates that effect and makes forces in the wind turbine more constant. These effects are important in the current design. It is, however, not obvious to introduce this tilt angle in the current design. In fact, prior art WO9521326 does not even mention this. In the current design, a tilt angel α is defined, which in fact positions the turbine rotor shaft away from a perpendicular (90°) angle with respect to the longitudinal direction of the inner and outer vertical drive shafts 6, 7, or defined by the drive shafts rotational axis R2). Usually, a tilt angle of between 1° and 10° is sufficient. In most designs, a tilt angle of between 2° and 7° is selected. In the current embodiment of figure 2, a tilt angle of 5° is selected. In figures 2, 2A the tilt angle is "up", but a similar tilt angle "down" may also be used. In an 'upwind' wind turbine of figure 1, usually the tilt angle α is directed 'up'.

In the current design, the rotor gear system 5 comprises a set of conical rotor gears 10, 12. These conical rotor gears 10 and 12 have slightly different conical angles β, γ, respectively. The conical rotor gears 10, 12 both are part of virtual cones that both have a top that lies on the vertical drive shaft rotational axis R2. In the embodiment of figure 2, the first

The conical rotor gears 10, 12 are coaxially coupled with said turbine rotor shaft 9. In the embodiment of figure 2, the conical rotor gears 10 and 12 provide two coaxial, conical toothed rings. These rings have a different distance from the vertical drive shaft rotational axis R2. The first conical angle β is the conical angle of the first conical rotor gear 12. The second conical angle γ is the conical angle of the second conical rotor gear 10. (fig. 2A).

The gear system 5 further comprises a first conical drive gear 13 on said inner vertical drive shaft 7, and the gear system 5 further comprises a conical second drive gear 11 on said outer vertical drive shaft 6. In this embodiment, the first conical drive gear is the upper conical drive gear and the second conical drive gear is the lower conical drive gear. The first conical rotor gear 12 here engages the first conical drive gear on the inner vertical drive shaft 6. The second conical rotor gear 10 engages the second conical drive gear on the outer vertical drive shaft 7. The first conical rotor gear 12 in this embodiment is the inner conical rotor gear, and the second conical rotor gear 10 is the outer conical rotor gear 12.

In this embodiment, the second (here outer) conical rotor gear 10 is closer to the vertical drive shaft rotational axis R2 then the first (here inner) conical rotor gear 12.

The set of conical rotor gears 10, 12, and the conical first and second drive gears 11, 13 are mutually adapted for allowing coupling the rotor shaft 9 to the inner and outer vertical drive shafts 7, 6, with their drive shaft rotational axis and the rotor rotational axis at an angle of between 91 and 100 degrees, i.e., perpendicular with an additional tilt angle of 1°-10°. In this way, in fact the rotor can be at a tilt angle α, equal to β - γ.

Figure 2 shows a schematic design of the rotor gear system 5 with a large (composite) conical gear wheel with a slightly tilted rotational axis (R). This large conical gear wheel comprises or is composed of in fact two conical gears 10 and 12. One (10) at the high circumference to be connected to the conical gear 11 turning the outer vertical drive shaft 6 en an inner conical gear 12, which lies slightly deeper in the large composite gear wheel than the outer one (10), to transfer rotation to the inner vertical drive shaft 7. By properly designing the conical corners of the two gears 10 and 12 such that the difference between the top angles of both (β, γ) equals the tilting angle α, the rotational speeds transferred to both vertical drive shafts (6, 7) are, although in opposite directions, of the same speed. This requirement allows damping of oscillations that can occur in the vertical drive shaft system 6, 7.

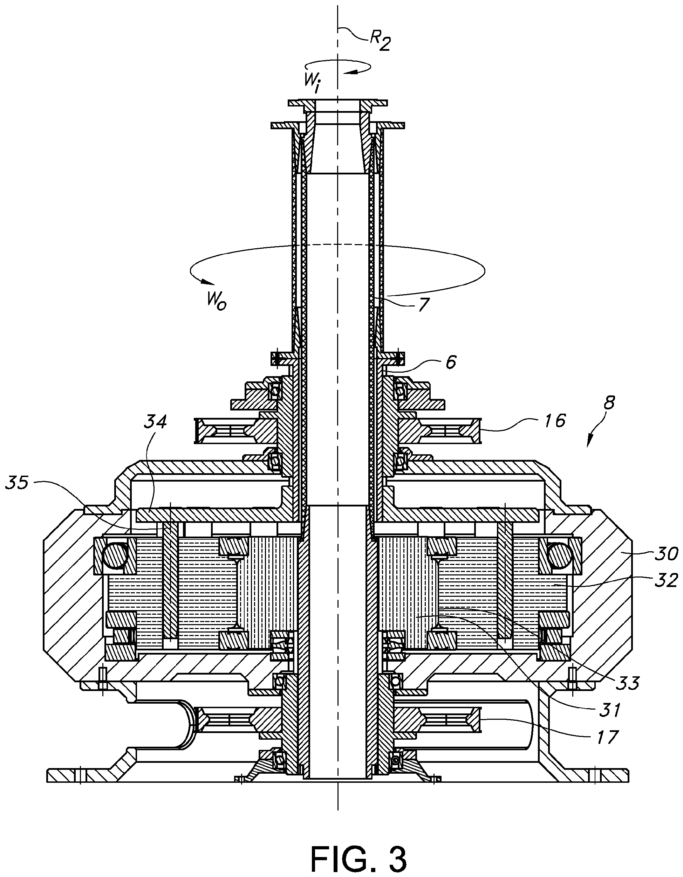

Figure 3 shows an embodiment of an electrical generator 8 in cross section. The electrical generator, shortly 'generator', has a housing 30. The housing 30 has fixing provisions for fixing the housing to the world. Usually, the generator housing 30 will be fixed to the tower 2, or stationary with respect to tower 2. Here, Wi indicates the rotational direction of the inner vertical drive shaft 7 and Wo indicates the rotational direction of the outer vertical drive shaft 6.

Generator 8 comprises an inner generator rotor 31 and an outer generator rotor 32. These inner and outer generator rotors 31 and 32 are concentric, and define an air gap 33 between then. The inner generator rotor 31 is coupled to the inner vertical drive shaft 7, here fixed to it. The outer generator rotor 32 is coupled to the outer vertical drive shaft 6, here fixed to it. In fact, here as an example of a possible coupling, a plate 34 with coupling pins 35 couples the outer shaft 6 to the outer generator rotor 32. Both inner and outer vertical drive shafts 6, 7 may be coupled via a spline coupling. This to levy length changes in the vertical drive shafts 6, 7, or length/height changes in the tower 2, for instance.

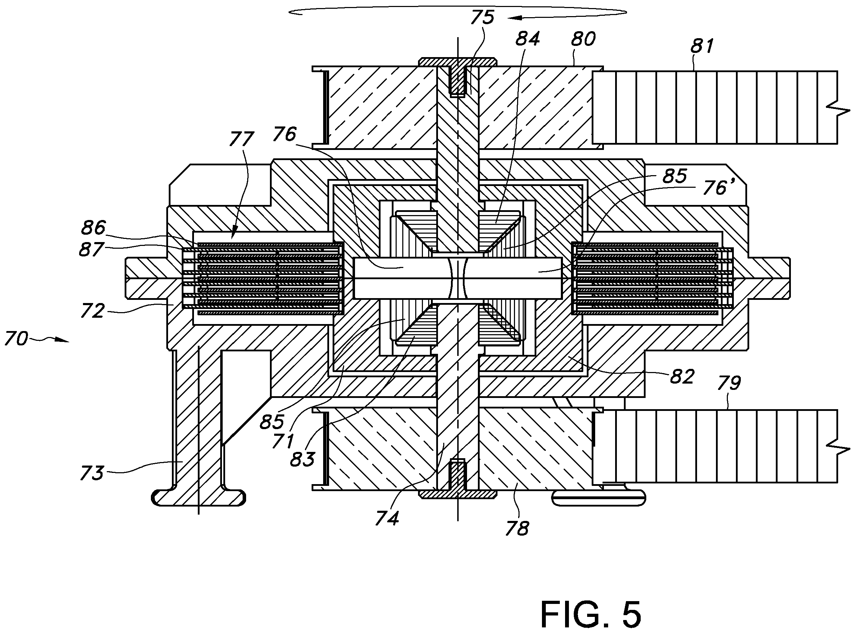

One of the inner generator rotor 31 and the outer generator rotor 32 may comprise permanent magnets to provide alternation magnetic poles. One or both of the inner generator rotor 31 and the outer generator rotor 32 may comprise coils for inducing a voltage and a current. Toothed pulleys 16 and 17 will be discussed below, and here couple to a damping system of figure 5. In figure 3, several bearings are schematically indicated. The actual positioning and presence of bearings may differ, however.

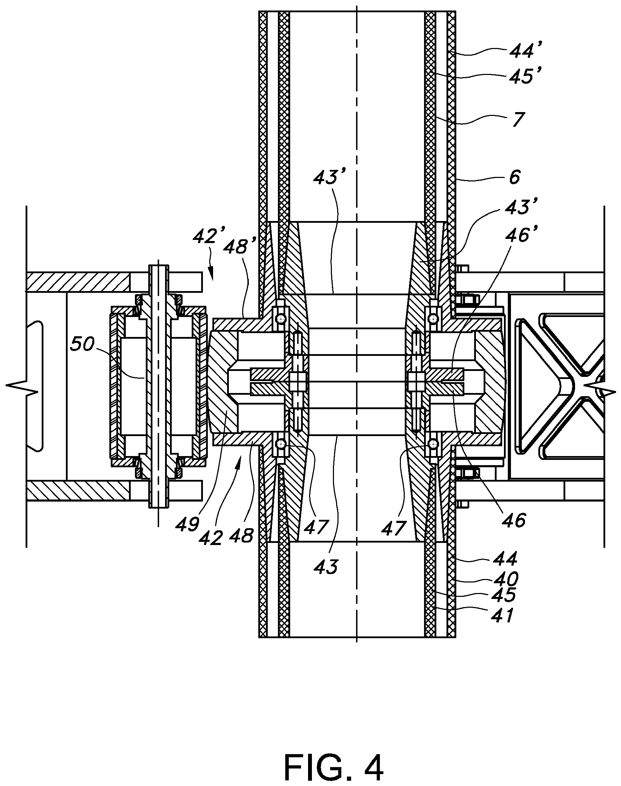

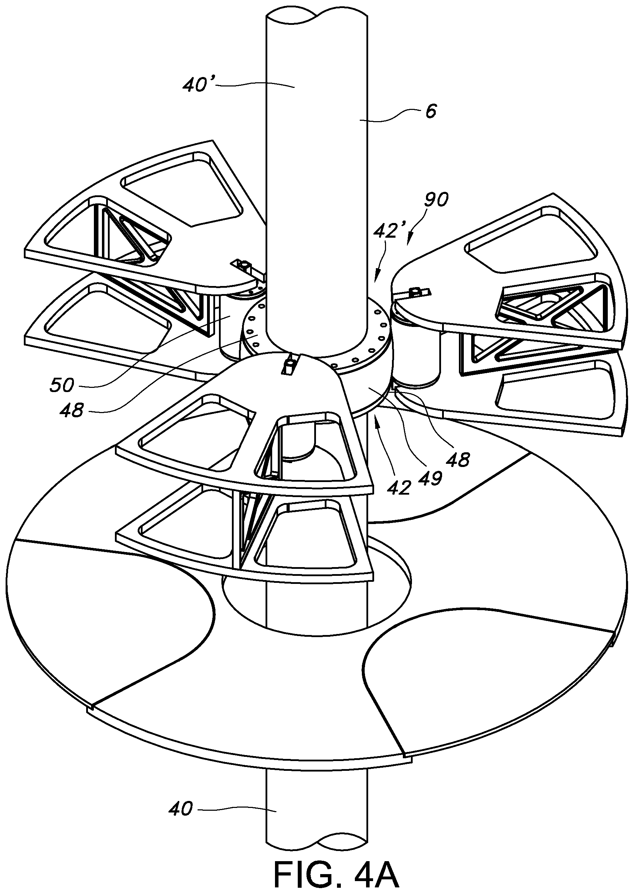

Figures 4 and 4A shows a part of the outer vertical drive shaft 6 and the inner vertical drive shaft 7. The inner vertical drive shaft 7 and the outer vertical drive shaft 6 (in short: drive shafts) provide a coupling of the rotor shaft 9 to the electrical generator 8. The drive shafts 6, 7 are coaxially arranged with respect to one another. The adjective 'vertical' refers to the orientation of the drive shafts 6, 7. The inner and outer vertical drive shafts can be up to 100 meters long. This means that the drive shafts 6, 7 need to be able to resist or take up high torsion deflections. In order to reduce weight and thus take full advantage of the current design, one of these advantages being reducing weight, the drive shafts 6, 7 are made from a fibre reinforced composite materials . Suitable fibre reinforced composites comprise fibre material that is commercially sold under the names Dyneema, Aramid, and Kevlar. It was found, however, that in order to provide a high degree of rigidity and strength, carbon fibre reinforced composites are preferred.

Despite the high resistance of the current composite materials, it was realized the drive shafts remain a vulnerable and perhaps the most vulnerable part of the design. It was therefore that the inner and outer vertical drive shafts 6, 7 are segmented into inner drive shaft segments 41 and outer drive shaft segments 40. In particular, these drive shaft segments 40 are between 5 and 10 meter long. This makes the segments 40, 41 still relatively easy to handle and to transport. It is foreseen that it may be needed to provide some spare segments 40, 41 at or near the wind turbine 1.

In an embodiment, the inner and outer segments 41, 40 have the same pitch in the vertical drive shafts 6, 7. Thus, coupling of the inner and outer segments 41, 40 will be at the same places along the vertical drive shafts 6, 7. In fact, the inner and outer segments will have substantially the same length, allowing an inner segment 41 and an outer segment 40 to be removed from the vertical drive shafts and to be replaced with new ones as one unit. In fact, an inner segment 41 and an outer segment 40 can be removable in a transverse direction, perpendicular to the vertical drive shafts rotational axis. In this embodiment, the inner and outer vertical drive shaft segments 41, 40 each comprise a respective inner tube part 45 and an outer tube part 44.

In the embodiment of figure 4, the inner and outer vertical drive shaft segments 41, 40 comprise ends provided with inner and outer segment coupling parts 43 and 42, respectively. The inner coupling part 43 in this embodiment comprises a flange 46. This flange 46 can be connected with an equivalent flange 46' of the coupling part 43' of an adjoining inner vertical drive shaft segment 41'.

In the embodiment of figure 4, the coupling part 43 comprises a bearing 47. Bearing 47 is fitted between the outside of the coupling part 43 and the inside of coupling part 42. In this way, the inner vertical drive shaft 7 is accurately held inside the outer vertical drive shaft 6. Figure 4A shows an embodiment of a bearing 47. Here, a set of rolls 50 is positioned around the outer vertical drive shaft 7 and in the tower 2. The rolls 50 bear against the outer segment coupling part 43, here against the outer surface of filling part 49.

As mentioned above, the outer segment 40 comprises a coupling part 42. Coupling part 42 in this embodiment comprises a flange 48. In mounted condition, when the segments 40 and 41 make the inner and outer vertical drive shafts 7, 6, the flange 48 of coupling part 42 faces a flange 48' of adjoining outer segment 40'. The lengths of the inner and outer segments 41 and 42 including their coupling parts 43 and 42 are such that the length of the inner segment 41 is larger than the length of the outer segment 42. This further allows removal of one inner and outer segment 43, 42 from the inner and outer vertical drive shaft 7, 6. The remaining distance between the flanges 48, 48' of the coupling part of the outer segments 42, 42' is here filled with a

filling part 49. The filling part 49 extends between subsequent outer segment coupling ends of subsequent outer vertical drive shaft segments 40 and 40'. This filling part 49 may comprise a filling ring that may be divided into several wedged parts, which allows the filling part to be removed from between outer vertical drive shaft segments 40, 40' in a transverse direction. After two opposite filling parts 49 at two ends of an outer vertical drive shaft segment 40 is removed, the coupling parts 43 that hold an inner vertical drive shaft segment 41 can be detached. After this, a complete inner and outer drive shaft segment 41, 40, can be removed in a transverse direction and substituted for a new one.

In this embodiment, the outer drive shaft comprises bearings 50 for keeping the outer drive shaft 6 in place. The bearing 50 also bears against the inner side of tower 2, often via supports. Here the bearing 50 at its inner part bears against the outer surface of the outer vertical drive shaft coupling part 42. In particular, the bearing 50 bears against the outer surface of the filling part 49. Another possibility is to align the outer vertical shaft at the centre of the tower by at least three rollers against the connecting piece 49 and connected by a frame to the tower with a vertical axis.

Figure 4 also shows the connection of the shafts to the flanges. The inner constitutes entirely of fiber reinforced polymeric material, but one flange with collar has to be glued on the axis after this inner axis is accommodated, together with the ball bearings, into the outer axis. This requirement is necessary in order to allow putting the two axis elements together during the fabrication process. The outer axis, also made out of high strength fibre reinforced polymers, has flange boxes enclosing the inner axis flanges. This flange has holes to give access to tools to bolt the adjacent axis system elements together during building up of the wind mill.

In figure 5, a damping system 70 for damping the torsional vibrations between the inner vertical drive shaft 7 / generator rotor 33 and the outer vertical drive shaft 6 / generator rotor 32 is shown in a cross sectional view. The damping system 70 comprises a differential 71. Differential 71 is in this embodiment positioned in a closed housing 72. Housing 72 has attachment provisions 73 for fixing the housing 72 to the outside world. Differential 71 has a first damper shaft 74 and a second damper shaft 75 opposite one another. Differential 71 further has resultant damper shafts 76, 76' that are opposite to one another. These resultant damper shafts 76, 76' are arranged for in operation having an angular velocity that equal to the sum of the first and second damper shaft. Often, resultant drive shafts 76, 76' will be one single shaft, or are coupled to allow a common rotational speed. For providing its damping operation, the first damper shaft 74 is here coupled to respective said inner vertical drive shaft and/or said inner generator rotor (not shown). The second damper shaft 75 is coupled to respective said outer vertical drive shaft and/or said outer generator rotor (not shown). In this embodiment, the first and second damper shafts 74, 75 extend outside housing 72 in opposite direction and in-line. The first and second damper shafts 74, 75 are coupled in this embodiment via a toothed wheel or toothed pulley 78 and a toothed belt 79, and a toothed wheel or toothed pulley 80 and toothed belt 81, respectively. The other ends of the toothed belts 79, 81 engage pulleys 16 and 17 of figure 3.

The resultant damper shafts 76, 76' are coupled to an energy dissipater 77. In this embodiment, the resultant damper shafts 76, 76' are rotatably about their longitudinal axes coupled in a differential frame 82. Differential frame 82 is also positioned inside damper housing 72. Often, this differential frame 82 is a closed housing. The first and second damper shafts 74, 75 are rotatably held in said differential frame 82. Furthermore, first and second damper shafts 74, 75 are here rotatably about their longitudinal axes held in said damper housing 72.

In this embodiment, the first and second damper shafts and the resultant shafts 76, 76' are mutually coupled via a set of, in this example, four conical gears 83, 84, 85, 85'. Two opposite, mirrored conical gears 83, 84 are rotationally fixed to respectively the first and second damper shafts 74, 75. Two further, mirrored conical gears 85, 85' are rotationally fixed to respectively the resultant shafts 76, 76'. In this constellation, as long as the angular velocity (rotational speed) of the first and second damper shafts 74, 75 are equal, both further conical gears 85, 85' will co-rotate freely and will not, via resultant shafts 76, 76', exert an angular force about the longitudinal axes of the first and second damper shafts 74, 75 and to the differential frame 71. However, as soon as there is a difference in angular velocity (rotational speed), there will be a resulting angular force about the longitudinal axes of the first and second damper shafts 74, 75 and to differential frame 71. This will induce a rotation of the differential frame 82 inside and with respect to the stationary damper housing 72. Between the differential frame 82 and the stationary damper housing 72 energy can be dissipated in various ways. Often, this results in the conversion of mechanical energy into heat. For instance, the principle of eddy current may be used. In this embodiment, first fins 86 are attached to the outside of the differential frame 82. Furthermore, in this embodiment, second fins 87 are attached to the inside of stationary damper housing 72. The first fins 86 and second fins 87 are here alternately positioned. The damper housing 72 is filled with a viscous fluid, also filling the space between the first fins 86 and the second fins 87. When the differential frame 82 starts to rotate, the viscous fluid will heat up due to frictional forces. The viscous fluid may exchange heat with a fluid outside the damper housing 72, for instance via a heat exchanger.

Figure 5 shows the transfer of the rotational movement, but not the rotational power, from the two vertical axes nearby their mutual generator rotors. This transfer is achieved by geared belts which give a predetermined acceleration to the axes entering the oscillation damping device. Such a system of a geared belt is chosen as it gives low mechanical losses, and also as it can operate in on oil free environment, which is necessary in the vicinity of the generator rotors.

Figure 5 shows an embodiment of the actual damping device. Two vertical axes enter a 'differential' gear system such that the gears turning around the horizontal axes only move this horizontal axis when there is a difference in the opposite rotational speeds of both incoming axes. The horizontal axes rotate the housing which in turn is connected to and rotate metal plates immersed in oil. These plates are individually stacked between stationary plates. The viscous friction between the plates realize absorption of the oscillation energy over the entire volume of the stacked plates. In such a way the heat is generated over a large surface area and can be cooled away by water carrying channels. The plates can be compressed together with spring loading system. However, in view of thermal expansion of components, preferably they are loaded by a heavy thick plate element on the plate package. The whole system is immersed with oil. It may well be that the oil is slowly pumped around and externally cooled as it is customary in the automobile application.

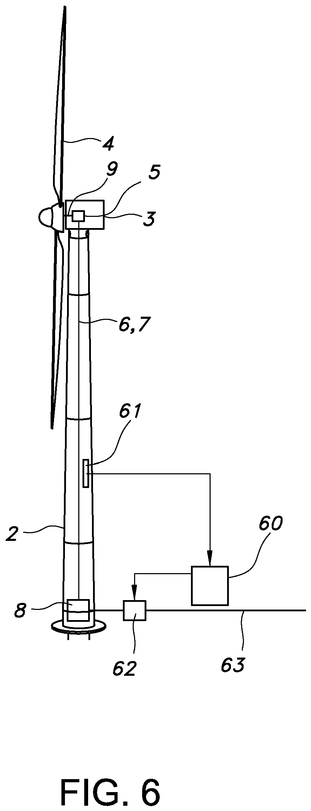

Figure 6 shows an embodiment of the torsion control system. The torsion control system for the wind turbine comprises a sensor 61 for providing a torque in at least one of the inner vertical drive shaft 6 and the outer vertical drive shaft 7. Such a sensor 61 may be a sensor for determining an amount of torsion that is present in one or more of the inner vertical drive shaft 6 and the outer vertical drive shaft 7, or in both. Such a sensor may be for instance an optical sensor. Alternatively or in combination, a strain gauge may be used. A controller 60 is functionally coupled to the sensor 61. Functionally coupled comprises a physical link for transferring data, but may also comprise a wireless link, for instance via WIFI, Bluetooth, Zigbee, or the like. Alternatively, the amount of torque in the inner and/or the outer vertical drive shafts may also be derived from other parameters or measurements, for instance indirect. In an embodiment, the torque may be derived from measurements of wind speed or change in wind speed, rotational speed or change in rotational speed of the turbine rotor shaft and/or of other elements in the drive train, possibly in combination with wind direction or change in wind direction. Such data may be combined with known values of these parameters linked to measured torque or torsion data of vertical drive shafts, or used to derive or find torque or torsion data from a database.

The controller 60 receives a measure of the amount of torsion and/or torque. Alternatively, the controller 60 calculates such a parameter. The controller compares the amount of torque and/or torsion and or rate of change of these values, and provides a control signal to a power source 62. Power source 62 is coupled to electrical generator. Based upon the control signal, the power source 62 powers the electrical generator 8 to provide torque to at least one of the inner and outer vertical drive shafts 6, 7. The control signal is adapted for at least partially compensation a determined amount of torque or torsion in at least one of the inner and outer vertical drive shafts 6, 7.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

List of reference numbers

**[0137]**

1. Wind turbine
2. Tower
3. Nacelle
4. Turbine rotor
5. Rotor gear system
6. Inner vertical drive shaft
7. Outer vertical drive shaft
8. Electrical generator
9. Turbine rotor shaft
10. Second/outer conical rotor gear
11. Second/lower conical drive gear
12. First/inner conical rotor gear
13. First/upper conical drive gear
14. First/upper bearing holding vertical drive shafts pending
15. Second/lower bearing holding vertical drive shafts pending
16. Pulley
17. pulley
30. housing (of electrical generator)
31. inner generator rotor
32. outer generator rotor
33 air gap
34 plate
35 coupling pins
40. outer drive shaft segment
41. inner drive shaft segment
42. outer segment coupling part
43. inner segment coupling part
46, 46' flange (of coupling part)
47, 47' bearing
48, 48' flanges
49 filling part
50. Bearing
60. controller (of torsion control system)
61. torsion/torque sensor
62. Power source
63. power grid
70. damping system
71. differential
72. housing
73. Attachment provisions
74. first damper shaft
75. second damper shaft
76, 76' Resultant damper shafts
77. energy dissipater
78. toothed pulley
79. toothed belt
80. toothed pulley
81. toothed belt
82. Differential frame

83, 84 set of opposite conical gears

85, 85' set of opposite conical gears (of differential 71)

86. rotatable fins on differential frame

87. stationary fins

α = tilt angle

β = first conical angle of the first conical rotor gear

γ = second conical angle of the second conical rotor gear

R = rotor shaft rotational axis

R2 = drive shafts rotational axis

L = line perpendicular with respect to the drive shaft rotational axis R2, and in-plane with rotors shaft rotational axis R and drive shaft rotational axis R2

Wi = rotational direction of the inner vertical drive shaft

Wo = rotational direction of the outer vertical drive shaft

**Claims**

1. A wind turbine (1), comprising:

    - a turbine rotor shaft (9), coupled to a turbine rotor (4) and defining a rotor rotational axis, said turbine rotor (4) comprising a set of turbine rotor blades;
    - an outer vertical drive shaft (7), and an inner vertical drive shaft (6) coaxially within said outer vertical drive shaft;
    - a rotor gear system (5) coupling said inner and outer vertical drive shafts to said turbine rotor shaft;
    - an electrical generator (8) for converting mechanical energy of said turbine rotor into electrical energy, coupled to said inner and outer drive vertical shafts, and

    wherein said rotor gear system comprises a set of conical rotor gears (10, 12), coaxially coupled with said turbine rotor shaft (9), a first conical rotor gear engaging a conical first drive gear (13) on said inner vertical drive shaft (6), and a second conical rotor gear engaging a conical second drive gear (11) on said outer vertical drive shaft (7), said wind turbine (1) further comprising a damping system (70) for damping oscillations between a first drive train comprising the outer vertical drive shaft (7) and a second drive train comprising the inner vertical drive shaft (6), said damping system (70) comprising a differential (71) having opposite first and second damper shafts (74, 75) and a resultant damper shaft (76) arranged for in operation having an angular velocity that is the sum of the rotation of the first and second damper shafts, said first and second damper shafts coupled to respective said first and second drive trains, and said resultant damper shaft (76) coupled to an energy dissipater (77).

2. The wind turbine of claim 1, wherein the electrical generator comprises a coaxial inner and outer generator rotor (31, 32) coupled to said inner and outer drive vertical shafts.

3. The wind turbine of claim 2, wherein said first drive train comprises the outer vertical drive shaft and the outer generator rotor is coupled to the outer vertical drive shaft and said second drive train comprises the inner vertical drive shaft and the inner generator rotor is coupled to the inner vertical drive shaft.

4. The wind turbine of any one of the preceding claims, wherein said first and second damper shafts are coupled to said respective first and second drive train via a chain drive or a belt drive.

5. The wind turbine of any one of the preceding claims, wherein said differential comprise two sets of opposite, intermeshing conical gears in an inner damper housing, with said first and second damper shafts coupled to opposite conical gears of one of said set of conical gears, and at least one of said conical gears of said other set of conical gears coupled to said inner damper housing, and wherein said inner damper housing is rotatably providing an outer damper housing, and wherein said energy dissipater is provided between said inner damper housing and said outer damper housing.

6. The wind turbine of any one of the preceding claims, wherein said set of conical rotor gears and said conical first and second drive gears are mutually adapted for coupling said turbine rotor shaft to said inner and outer vertical drive shaft with their drive shaft rotational axis and said rotor rotational axis at a tilt angle of between 1° and 10°.

7. The wind turbine of any one of the preceding claims, wherein said first conical rotor gear has a first conical angle β, is coaxially coupled with said turbine rotor shaft and engages said conical first drive gear on said inner vertical drive shaft, and said second conical rotor gear has a second conical angle γ, is coaxially coupled to said turbine rotor shaft and engages said conical second drive gear on said outer vertical drive shaft, with said first conical rotor gear concentric with said second conical gear, and with said first conical angle β and said second conical angle γ differing a tilt angle α of between 1° and 10°.

8. The wind turbine according to any one of the preceding claims, wherein said first conical rotor gear and said second conical rotor gear are mounted at mutually different distances to said drive shaft rotational axis.

9. The wind turbine of any one of the preceding claims, wherein said first conical rotor gear is mounted at a larger distance from said drive shaft rotational axis than said second conical rotor gear.

10. The wind turbine of any one of the preceding claims, wherein a first gearing ratio of said first conical rotor gear and said first conical drive gear and a second gearing ratio of said second conical rotor gear and said second conical drive gear are substantially the same.

11. The wind turbine of any one of the preceding claims, wherein said second conical rotor gear has a larger diameter than said first conical rotor gear.

12. The wind turbine according to any one of the preceding claims, wherein said electrical generator (8) comprises a generator housing (30) allowing fixing to a fixed reference frame of said wind turbine, said outer generator rotor rotatably about an electrical generator rotational axis mounted in said generator housing, and said inner generator rotor mounted rotatably with respect to said housing and said outer generator, with an air gap (33) between said outer and inner generator rotors (31, 32), in particular wherein said inner generator rotor carries permanent magnets.

13. A method for controlling a wind turbine according to any one of the preceding claims, comprising determining a torque on at least one of said driving shafts, calculating an amount of electrical power to be supplied to said generator in response to said determined torque, and applying said calculated electrical power to said generator.

14. A computer program product which, when running on a computer system, allows said computer system to operate as a controller in a wind turbine according to any one of the preceding claims, wherein said computer program instructs said computer to:

    - determine a torque on at least one of said vertical drive shafts;
    - calculate an amount of electrical power to be supplied to said generator in response to said determined torque, and
    - apply said calculated electrical power to said generator.


**Patentansprüche**

1. Windturbine (1), umfassend:

    - eine Turbinenrotorwelle (9), die mit einem Turbinenrotor (4) gekoppelt ist und eine Rotordrehachse definiert, wobei der Turbinenrotor (4) Turbinenrotorblättern aufweist;
    - eine äußere vertikale Antriebswelle (7) und eine innere vertikale Antriebswelle (6) koaxial innerhalb der äußeren vertikalen Antriebswelle;
    - ein Rotorgetriebe (5), das die innere und äußere vertikale Antriebswellen mit der Turbinenrotorwelle verbindet;
    - einen elektrischen Generator (8) zum Umwandeln mechanischer Energie des Turbinenrotors in elektrische Energie, gekoppelt mit die innere und äußere vertikale Antriebswellen, und

    wobei das Rotorgetriebe konischen Rotorzahnräder (10,12) aufweist, die koaxial mit der Turbinenrotorwelle (9) gekoppelt sind und mit einem ersten konischen Rotorzahnrad mit einem konischen ersten Antriebszahnrad (13) auf der inneren vertikalen Antriebswelle (6) in Eingriff steht und mit einem zweiten konischen Rotorzahnrad mit einem konischen zweiten Antriebszahnrad (11) auf der äußeren vertikalen Antriebswelle (7) in Eingriff steht, die Windturbine (1) ferner mit einem Dämpfungssystem (70) zum Dämpfen von Schwingungen zwischen einem ersten Antrieb das den äußeren vertikalen Antriebswellen (7) umfasst und einem zweiten Antrieb das den innere vertikale Antriebswelle (6) umfasst, wobei das Dämpfungssystem (70) ein Differential (71) mit gegenüberliegenden ersten und zweiten Dämpferwellen (74,75) und eine daraus resultierende Dämpferwelle (76) aufweist, die im Betrieb mit einer Winkelgeschwindigkeit angeordnet ist, die die Summe der Drehung ist von die ersten und zweiten Dämpferwellen, wobei die ersten und zweiten Dämpferwellen jeweils mit dem ersten und dem zweiten Antrieb gekoppelt sind und die resultierende Dämpferwelle (76) mit einem Energieverteiler (77) gekoppelt ist.

2. Windturbine nach Anspruch 1, wobei der elektrische Generator einen koaxialen inneren und äußeren Generatorrotor (31, 32) aufweist, der mit der vertikalen Innen- und Außenantriebswellen gekoppelt sind.

3. Windturbine nach Anspruch 2, wobei der erste Antrieb den äußeren vertikalen Antriebswellen aufweist und das äußeren Generatorrotor mit der äußeren vertikalen Antriebswelle gekoppelt ist und der zweite Antrieb den inneren Generatorrotor aufweist und das inneren Generatorrotor mit der inneren Generatorrotor gekoppelt ist.

4. Windturbine nach einem der vorhergehenden Ansprüche, wobei die erste und die zweite Dämpferwelle über einen Kettenantrieb oder einen Riemenantrieb mit dem jeweiligen ersten und zweiten Antrieb gekoppelt sind.

5. Windturbine nach einem der vorhergehenden Ansprüche, wobei das Differential zwei Sätze von entgegengesetzten, ineinandergreifenden konischen Zahnrädern in einem inneren Dämpfergehäuse umfasst, mit die ersten und zweiten Dämpferwellen mit entgegengesetzten konischen Zahnrädern eines der konischen Zahnräder gekoppelt sind, und wobei mindestens eines der konischen Zahnräder des anderen Satzes von konischen Zahnrädern mit dem inneren Dämpfergehäuse gekoppelt ist, und wobei das innere Dämpfergehäuse drehbar ein äußeres Dämpfergehäuse vorsieht und wobei der Energieverteiler zwischen dem inneren Dämpfergehäuse und dem äußeren Dämpfer vorgesehen ist.

6. Windturbine nach einem der vorhergehenden Ansprüche, wobei die konische Rotorzahnräder und die konischen ersten und zweiten Antriebszahnräder gegenseitig angepasst sind, um die Turbinenrotorwelle mit der inneren und äußeren vertikalen Antriebswelle mit ihrer Antriebswellen-Drehachse und der Rotor-Drehachse zu verbinden Bei einem Neigungswinkel zwischen 1 ° und 10°.

7. Windturbine nach einem der vorhergehenden Ansprüche, wobei das erste konische Rotorzahnrad einen ersten konischen Winkel β aufweist, koaxial mit der Turbinenrotorwelle gekoppelt ist und in das konische erste Antriebszahnrad auf der inneren vertikalen Antriebswelle eingreift und das zweite konische Rotorzahnrad einen zweiten konischen Winkel γ aufweist, koaxial mit der Turbinenrotorwelle gekoppelt ist und mit dem konischen zweiten Antriebszahnrad auf der äußeren vertikalen Antriebswelle in Eingriff steht, wobei das erste konische Rotorzahnrad konzentrisch mit dem zweiten konischen Zahnrad ist und wobei die Differenz zwischen der erste konische Winkel β und der zweite konische Winkel γ einen Neigungswinkel α zwischen 1 ° und 10° aufweist.

8. Windturbine nach einem der vorhergehenden Ansprüche, wobei das erste konische Rotorzahnrad und das zweite konische Rotorzahnrad in gegenseitig unterschiedlichen Abständen zu der Antriebswellen-Drehachse angebracht sind.

9. Windturbine nach einem der vorhergehenden Ansprüche, wobei das erste konische Rotorzahnrad in einem größeren Abstand von der Antriebswellen-Drehachse als das zweite konische Rotorzahnrad montiert ist.

10. Windturbine nach einem der vorhergehenden Ansprüche, wobei ein erstes Übersetzungsverhältnis des ersten konischen Rotorzahnrads und des ersten konischen Antriebszahnrads und ein zweites Übersetzungsverhältnis des zweiten konischen Rotorzahnrads und des zweiten konischen Antriebszahnrads im Wesentlichen gleich sind.

11. Windturbine nach einem der vorhergehenden Ansprüche, wobei das zweite konische Rotorzahnrad einen größeren Durchmesser als das erste konische Rotorzahnrad aufweist.

12. Windturbine nach einem der vorhergehenden Ansprüche, wobei der elektrische Generator (8) ein Generatorgehäuse (30) aufweist, das eine Befestigung an einem festen Bezugsrahmen der Windturbine ermöglicht, wobei der äußere Generatorrotor drehbar um eine in dem Generatorgehäuse angebrachte elektrische Generatorrotationsachse drehbar ist, und wobei der innere Generatorrotor drehbar in Bezug auf das Gehäuse und den äußeren Generator mit einem Luftspalt (33) zwischen dem äußeren und dem inneren Generatorrotor (31, 32) angebracht ist, wobei ins besondere der innere Generatorrotor Permanentmagnete trägt.

13. Verfahren zum Steuern einer Windturbine nach einem der vorhergehenden Ansprüche, umfassend das Bestimmen eines Drehmoments auf mindestens eine der Antriebswellen, Berechnen einer Menge an elektrischer Leistung, die dem Generator als Reaktion auf das bestimmte Drehmoment zugeführt werden soll, und Anwenden Die berechnete elektrische Leistung an den Generator.

14. Ein Computerprogrammprodukt das, wenn es auf einem Computersystem läuft, es dem Computersystem ermöglicht als ein Steuergerät in einer Windturbine nach einem der vorhergehenden Ansprüche zu arbeiten, wobei das Computerprogramm den Computer anweist:

- ein Drehmoment zu bestimmen an Mindestens eine der vertikalen Antriebswellen;
- Berechnen einer Menge an elektrischer Energie, die an dem Generator als Reaktion auf das bestimmte Drehmoment zugeführt werden soll, und
- die berechnete elektrische Energie an den Generator an zu legen.

**Revendications**

1. Une éolienne (1) comprenant:

- un arbre de rotor de turbine (9), couplé à un rotor de turbine (4) et définissant un axe de rotation de rotor, ledit rotor de turbine (4) comprenant un ensemble de pales de rotor de turbine;
- un arbre d'entraînement vertical extérieur (7) et un arbre d'entraînement vertical intérieur (6) coaxialement à l'intérieur dudit arbre d'entraînement vertical externe;
- un système d'engrenage à rotor (5) couplant lesdits arbres d'entraînement vertical intérieur et extérieur audit arbre de rotor de turbine;
- un générateur électrique (8) pour convertir l'énergie mécanique dudit rotor de turbine en énergie électrique, couplé aux lesdits arbres verticales d'entraînement intérieur et extérieur et dans lequel ledit système d'engrenage à rotor comprend un ensemble d'engrenages à rotor conique (10, 12), couplé coaxialement avec ledit arbre de rotor de turbine (9), un premier rotor conique engageant un premier engrenage d'entraînement conique (13) sur ledit arbre d'entraînement vertical interne (6) et un seconde rotor conique engageant un second engrenage d'entraînement conique (11) sur ledit arbre d'entraînement vertical extérieur (7), ledit éolienne (1) comprenant en outre un système d'amortissement (70) pour amortir les oscillations entre un premier train d'entraînement comprenant l'arbre d'entraînement vertical extérieur (7) et un second train d'entraînement comprenant l'arbre d'entraînement vertical intérieur (6), ledit système d'amortissement (70) comprenant un différentiel (71) ayant des premier et second arbres d'amortissement opposes (74, 75) et un arbre d'amortissement résultant (76) arrangé en fonctionnement ayant une vitesse angulaire qui est la somme de la rotation des premier et second arbres d'amortissement, lesdits premier et second les arbres d'amortissement couplés auxdits premier et second trains d'entraînement respectifs, et ledit arbre d'amortissement résultant (76) couplé à un dissipateur d'énergie (77).

2. L'éolienne selon la revendication 1, dans laquelle le générateur électrique comprend un rotor générateur intérieur et extérieur coaxial (31, 32), couplé à auxdits arbres verticales d'entraînement intérieur et extérieur.

3. L'éolienne selon la revendication 2, dans laquelle ledit premier train d'entraînement comprend les arbres d'entraînement verticaux extérieurs et le rotor extérieur du générateur est couplé à l'arbre d'entraînement vertical extérieur et ledit second train d'entraînement comprend l'arbre d'entraînement vertical intérieur et le rotor intérieur du générateur est couplé à l'arbre d'entraînement vertical intérieur.

4. L'éolienne selon l'une quelconque des revendications précédentes, dans laquelle lesdits premier et second arbres d'amortissement sont couplés auxdits premier et second trains d'entraînement respectifs par l'intermédiaire d'un entraînement à chaîne ou d'un entraînement par courroie.

5. L'éolienne selon l'une quelconque des revendications précédentes, dans laquelle ledit différentiel comprend deux ensembles d'engrenages coniques entrelacés opposés dans un boîtier d'amortisseur interne, lesdits premier et second arbres d'amortissement couplés à des engrenages coniques opposés de l'un desdits ensembles d'engrenages coniques et au moins l'un desdits engrenages coniques dudit autre ensemble d'engrenages coniques couplés audit boîtier d'amortisseur interne, et dans lequel ledit boîtier d'amortisseur interne fournit de manière rotative un boîtier d'amortisseur externe et dans lequel ledit dissipateur d'énergie est prévu entre ledit boîtier d'amortisseur interne et ledit amortisseur externe logement.

**6.** L'éolienne selon l'une quelconque des revendications précédentes, dans laquelle ledit ensemble d'engrenages de rotor coniques et lesdits premier et second engrenages d'entraînement coniques sont mutuellement adaptés pour coupler ledit arbre de rotor de turbine audit arbre d'entraînement vertical intérieur et extérieur avec leur axe de rotation d'arbre d'entraînement et ledit axe de rotation de rotor a un angle d'inclinaison compris entre 1 ° et 10°.

**7.** L'éolienne selon l'une quelconque des revendications précédentes, dans laquelle ledit premier engrenage à rotor conique présente un premier angle conique β, est couplé coaxialement avec ledit arbre de rotor de turbine et engage ledit premier engrenage d'entraînement conique sur ledit arbre d'entraînement vertical intérieur, et ladite seconde conique L'engrenage à rotor présente un deuxième angle conique γ, est couplé coaxialement audit arbre du rotor de la turbine et engage ledit second engrenage d'entraînement conique sur ledit arbre d'entraînement vertical extérieur, ledit premier engrenage de rotor conique étant concentré avec ledit second engrenage conique et avec ledit premier angle conique B et ledit second angle conique γ différant d'un angle d'inclinaison α compris entre 1 ° et 10°.

**8.** L'éolienne selon l'une quelconque des revendications précédentes, dans laquelle ledit premier engrenage à rotor conique et ledit deuxième engrenage à rotor conique sont montés à des distances mutuellement différentes par rapport à l'axe de rotation de l'arbre d'entraînement.

**9.** L'éolienne selon l'une quelconque des revendications précédentes, dans laquelle ledit premier engrenage à rotor conique est monté à une distance plus grande dudit axe de rotation de l'arbre d'entraînement que ledit second engrenage à rotor conique.

**10.** L'éolienne selon l'une quelconque des revendications précédentes, dans laquelle un premier rapport d'engrenage dudit premier engrenage de rotor conique et ledit premier engrenage d'entraînement conique et un second rapport d'engrenage dudit second engrenage de rotor conique et ledit deuxième engrenage d'entraînement conique sont sensiblement les mêmes.

**11.** L'éolienne selon l'une quelconque des revendications précédentes, dans laquelle ledit deuxième engrenage à rotor conique a un diamètre plus grand que ledit premier engrenage à rotor conique.

**12.** L'éolienne selon l'une quelconque des revendications précédentes, dans laquelle ledit générateur électrique (8) comprend un boîtier de générateur (30) permettant de se fixer sur un cadre de référence fixe de ladite turbine éolienne, ledit rotor de générateur extérieur pouvant tourner autour d'un axe de rotation de générateur électrique monté dans ledit boîtier de générateur et ledit rotor de générateur interne monté en rotation par rapport audit boîtier et audit générateur externe, avec un entrefer (33) entre lesdits rotors de générateur extérieurs et intérieurs (31,32), en particulier dans laquelle ledit rotor de générateur interne porte des aimants permanents.

**13.** Procédé de commande d'une éolienne selon l'une quelconque des revendications précédentes, comprenant la détermination d'un couple sur au moins l'un desdits arbres d'entraînement, calculer une quantité d'énergie électrique à fournir audit générateur en réponse audit couple déterminé et appliquer ladite énergie électrique calculée audit générateur.

**14.** Un produit de programme informatique qui, lors de l'exécution sur un système informatique, permet à ledit système informatique de fonctionner comme contrôleur dans une éolienne selon l'une quelconque des revendications précédentes, dans lequel ledit programme informatique commande audit ordinateur de:

- déterminer un couple sur Au moins l'un desdits arbres d'entraînement verticaux;
- calculer une quantité d'énergie électrique à fournir audit générateur en réponse audit couple déterminé, et
- appliquer ladite puissance électrique calculée audit générateur.

# FIG. 1

FIG. 2

FIG. 2A

FIG. 3

FIG. 4

FIG. 4A

FIG. 5

EP 3 027 902 B1

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4565929 A
- US 7667343 B
- EP 2249030 A
- WO 9521326 A